Europäisches Patentamt

European Patent Office

Office européen des brevets

(11) Publication number: **0 343 756**
**A1**

## (12) EUROPEAN PATENT APPLICATION

(21) Application number: **89201351.7**

(22) Date of filing: **26.05.89**

(51) Int. Cl.⁴: **A23N 12/02**

(30) Priority: **26.05.88 NL 8801353**

(43) Date of publication of application:
**29.11.89 Bulletin 89/48**

(84) Designated Contracting States:
**BE DE FR GB NL**

(71) Applicant: **D. VAN DIJKE BLOEMBOLLENMACHINES EN KONSTRUKTIEBEDRIJF**
**Krabbenkreekstraat 1A**
**NL-4675 AZ St. Philipsland(NL)**

(72) Inventor: **van Dijke, Dingeman**
**Krabbenkreekstraat 1A**
**NL-4675 AZ St.Philipsland(NL)**

(74) Representative: **Smulders, Theodorus A.H.J., Ir. et al**
**Vereenigde Octrooibureaux Nieuwe Parklaan 107**
**NL-2587 BP 's-Gravenhage(NL)**

(54) An apparatus for, and a method of, washing potatoes and like tuberous crops.

(57) A washing apparatus for bulbous or tuberous crops, such as potatoes, comprising a rinsing trough having a water supply arrangement and an overflow defining the water level in the trough, a supply end and a generally opposed discharge end for potatoes, as well as means for keeping the potatoes in motion in the body of water, including a pre-soaking channel (1) connected to the supply end of the rinsing trough (2) in such a manner that the water level (11) in the pre-soaking channel (1) is defined by the water level in the rinsing trough (2), the bottom of the pre-soaking channel (1) terminating below the water level (11) in the rinsing trough (2), defined by the overflow (6), the pre-soaking channel (1) including an axial transport means (8) which positively displaces potatoes and the like deposited in the channel to the rinsing trough (2) in a predetermined period of time and in a controlled manner.

FIG.1

# An apparatus for, and a method of, washing potatoes and like tuberous crops.

This invention relates to the removal of soil adhering to potatoes and other tuberous and bulbous crops by means of washing, prior to packaging, drying and/or transporting same to customers.

In general, for this purpose, potatoes and the like are rinsed by movement in a body of water to remove adhering soil. The required rinsing time is determined by the extent of adherence of the soil to the skin. For instance, potatoes coming direct from the land require a shorter rinsing time than do those removed from a storage space, which have a much more tenacious soil incrustation. The rinsing time during which the tubers scrape over and against each other, or along transport means in water is critical in the sense that when the rinsing time is too short, not all the adhering material is removed and when the rinsing time is too long, the skin may be damaged, which is also unacceptable.

It is an object of the present invention to provide a washing apparatus and a method to be performed with said apparatus, wherein the critical rinsing time need not be accurately determined.

The present invention is based on the insight that a very short rinsing time will be sufficient when the tubers are soaked while being fully immersed in water for a given period, the length of which likewise depends on the extent of adherence and drying up of soil, so that the adhering soil is saturated with water down to the skin of the tuber. In this process it is essential that the tubers are, and remain, fully immersed in order that the adhering soil may become fully saturated.

Based on this principle, the present invention provides a washing apparatus for potatoes and like tuberous or bulbous crops, comprising a rinsing trough having a water supply arrangement and an overflow determining the water level in the trough, a supply end and a generally opposed discharge end for the potatoes, as well as means for keeping the potatoes in the body of water in motion, and which, according to the present invention, is provided with a pre-soaking channel connected to the supply end of the rinsing trough in such a manner that the water level in the pre-soaking channel is determined by the water level in said trough, the bottom of the pre-soaking channel terminating below the water level in the trough, defined by the overflow, and the pre-soaking channel including an transport means for positively displacing potatoes and the like deposited in the channel to the rinsing trough in a predetermined period of time and in a controlled manner.

It can thus be ensured that earth adhering to each potato reaching the trough is completely soaked, so that the residence time in the rinsing trough can be limited to the short period necessary for detaching the soaked earth from the potato through mutual contact or water passing therealong.

In a preferred embodiment of the present invention, the pre-soaking channel has a cross-sectionally semi-circular bottom portion, and the transport means for positive and controlled displacement is a screw conveyor whose winding is adapted in shape to, and moves over, the channel bottom, and the connection of the channel to the rinsing trough is such that the water level in the pre-soaking channel defined by the overflow of the trough lies at or above the screw shaft.

Potatoes introduced at the inlet end of the pre-soaking channel, remote from the end connected to the rinsing trough, are positively displaced over the channel bottom by the rotating thread, while they remain entirely under water. The residence time in the pre-soaking channel is controlled by the speed of the screw conveyor, which is drivable continuously or intermittently.

In an embodiment of the washing apparatus which is distinguished by minimum water consumption, a receptacle is arranged behind the overflow of the rinsing trough, the lower end of which receptacle is connected to the lower end of a substantially funnel-shaped rinsing trough by means of a U-tube containing a pump element, said U-tube having a branch for discharging solid material loosened from the potatoes, such as mud and stones, while the receiving end of a discharge conveyor for washed potatoes extends into the receptacle, and, according to the invention, said pre-soaking channel is connected to the end of the rinsing funnel remote from the overflow.

When this embodiment of the washing apparatus is in operation, potatoes are introduced into the apparatus at the inlet end of the pre-soaking channel and displaced to the rinsing funnel in a controlled time interval. The pump element circulates water from the receptacle through the U-tube to the lower end of the rinsing funnel and through the overflow to the receptacle. The upward flow in the rinsing funnel provides for a cleansing upward whirling motion of the potatoes with completely soaked and hence easily loosened adherent soil. It is observed that in the pre-soaking channel, a part of the appendant soil has already been loosened. The cleansed potatoes arrive at the receptacle through the overflow and are removed from the apparatus through the discharge conveyor.

Preferably, at least the radially outer part of the conveyor screw winding is made from hard rubber or like rather flexible material, thereby preventing jamming due to wedged stones and the like.

It will be understood that where reference is made to potatoes in this specification the same applies to other bulbous or tuberous crops, such as flower bulbs and the like.

One embodiment of the washing apparatus according to the present invention will now be described, by way of example, with reference to the accompanying drawings, in which:

Fig. 1 is a diagrammatic side view of the apparatus; and

Fig. 2 is a cross-sectional view according to the arrow II-II of Fig. 1.

As shown in the drawings, the washing apparatus for bulbous or tuberous crops, such as potatoes or flower bulbs, comprises a pre-soaking channel 1, a rinsing funnel 2 and a receptacle 3 whose lower end is connected to the lower end of funnel 2 through a U-tube 4 containing a pump element 5. Rinsing funnel 2 and receptacle 3 have a rectangular upper boundary, with an edge of receptacle 3 being placed underneath an overflow 6 of funnel 2. Extending into receptacle 3 is the receiving end of a discharge conveyor, e.g. a barred conveyor belt 7. Receptacle 3 is fitted with a level-defining overflow 3'.

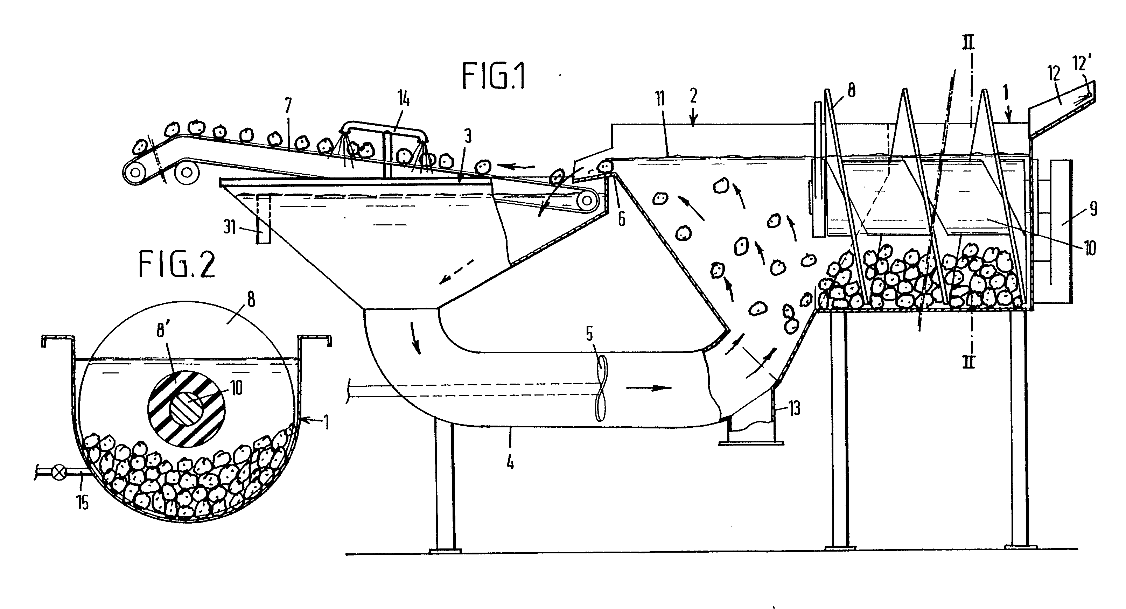

Pre-soaking channel 1 has a U-shaped cross section with a semi-circular bottom portion (see Fig. 2). Operating in channel 1 for positive controlled transportation is a screw 8 whose speed and timing are controllable by means of a drive mechanism 9 on shaft 10. Shaft 10 is made of metal. The thread 8 and a sheath 8' surrounding shaft 10 may be made from hard rubber or other flexible material.

The water level 11 is defined by overflow 6 in such a manner that shaft 10 of the screw lies at or below this level 11. The drawing further shows an inlet trough 12 for tubers with a sprayer pipe 12' and a branch 13 for mud and stones. To prevent loss of water through mud discharge 13, a container communicating with rinsing funnel 2 may be connected, containing a mud transport means.

The operation of the apparatus is as follows:

Potatoes are introduced into the apparatus at the inlet end 12 of pre-soaking channel 1 and displaced in a controlled time interval, e.g. 2 min., for potatoes coming directly from the land and 8-10 min. for potatoes from a storage space, to the rinsing funnel 2. Sprayer pipe 12' in inlet trough 12 prevents soil caking and forms a water film which promotes transport.

In rinsing funnel 2, pump element 5 maintains an upward flow in U-tube 4, whereby the water returns through overflow 6 and receptacle 3 to the suction side of pump element 5. By controlling the pumping action, a greater or lesser amount of thrust can be produced in rinsing funnel 2 for adaptation to the specific gravity of the product to be washed.

The potatoes falling from pre-soaking channel 1 into rinsing funnel 2 are swirled upwards by the upward water flow and, after a short residence time in rinsing funnel 2, transferred with the water through overflow 6 to receptacle 3, where they are collected by discharge conveyor 7 and removed from the washing apparatus for drying, packaging and/or transport to customers. By being sprayed with clean water (at 14) on discharge conveyor 7, the potatoes are cleansed and at the same time, the loss of water as water appending to the clean potatoes and via the mud and stone discharge 13, is compensated for. Also, additional water can be supplied into pre-soaking channel 1.

Accordingly, the apparatus functions substantially with recycling water, and compensation for losses can be limited to 20 $m^3$/hour or less.

Because the screw conveyor 8 fills up the working cross section of pre-soaking channel 1 and thus shuts this off axially, as viewed from the rinsing funnel, there will be no water transport in pre-soaking channel 1 against the direction of potato transport, thereby ensuring that the water flowing upwards in funnel 2 flows away only through overflow 6, thereby taking along the cleansed potatoes.

Fig. 2 shows a spray nozzle 15, a number of which may be distributed along the length of pre-soaking channel 1. The pre-soaking effect can be increased with injected water, possibly drawn off from receptacle 3.

## Claims

1. A washing apparatus for bulbous or tuberous crops, such as potatoes, comprising a rinsing trough having a water supply arrangement and an overflow defining the water level in the trough, a supply end and a generally opposed discharge end for potatoes, as well as means for keeping the potatoes in the body of water in motion, characterized by a pre-soaking channel (1) connected to the supply end of said rinsing trough (2) in such a manner that the water level (11) in pre-soaking channel (1) is determined by the water level in said rinsing trough (2), the bottom of pre-soaking channel (1) terminating below the water level (11) in said rinsing trough (2), defined by said overflow (6), and there being provided in said pre-soaking channel (1) an axial transport means (8) for positively displacing potatoes and the like deposited in the channel to said rinsing trough (2) in a predetermined period of time and in a controlled manner.

2. An apparatus as claimed in claim 1, characterized in that the pre-soaking channel (1) has a cross-sectionally semi-circular bottom portion and the transport means for positive and controlled displacement is a screw conveyor (8) whose winding is adapted in shape to, and moves over, the channel bottom, the connection of channel (1) to rinsing trough (2) being such that the water level in said pre-soaking channel (1), defined by the overflow (6) of said rinsing trough (2) lies at or above the screw shaft (10).

3. An apparatus as claimed in claim 2, wherein behind the overflow (6) of said rinsing trough (2) there is arranged a receptacle (3) whose lower end is connected, through a U-tube (4) containing a pump element (5), to the lower end of the rinsing trough (2), which is substantially funnel-shaped, said U-tube having a branch (13) for discharging solid material loosened from the potatoes, such as mud and also stones, the receiving end of a discharge conveyor (7) for washed potatoes extending into the receptacle, characterized in that the pre-soaking channel (1) is connected to the end of said rinsing funnel (2) remote from said overflow (6).

4. An apparatus as claimed in claim 2 or 3, characterized in that at least the radially outer portion of the winding (8) of the screw conveyor is made from hard rubber or like relatively flexible material.

5. An apparatus as claimed in any one of the preceding claims, characterized by water injection nozzles (15) in the side wall of the pre-soaking channel (1)

6. A method of washing potatoes, flower bulbs and like tuberous or bulbous crops, wherein soil and the like adhering to the potatoes is loosened and rinsed off during the transport of the potatoes through a body of water, characterized in that the potatoes are first moved under water in a pre-soaking container for an adjustable period of time depending upon the nature of the adhered soil, so as to saturate the adhered soil and the like with water and subsequently the material still adhering is removed from the potatoes during a short rinsing time.

FIG1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-1736813 (R.C.ZUCKERMAN)<br>* page 2, lines 97 - 127; figure 1 *<br>--- | 1-2, 6 | A23N12/02 |
| A | FR-A-1577622 (OPPERMANN & DEICHMANN)<br>* page 2, lines 11 - 35; figures 1-2 *<br>--- | 1, 6 | |
| A | DE-C-472509 (B.BLOCK)<br>* the whole document *<br>--- | 1, 3, 6 | |
| A | FR-A-2094624 (SOCIETE NOUVELLE DES ETABLISSEMENTS A. MAGUIN)<br>* the whole document *<br>--- | 1, 6 | |
| A | DE-C-372684 (S.WOLPERT)<br>----- | | |

TECHNICAL FIELDS
SEARCHED (Int. Cl.4)

A23N

The present search report has been drawn up for all claims

| Place of search | Date of completion of the search | Examiner |
|---|---|---|
| THE HAGUE | 24 AUGUST 1989 | NEHRDICH H.J |

EPO FORM 1503 03.82 (P0401)